# EUROPÄISCHE PATENTSCHRIFT

(11) **EP 0 788 898 B1**
(45) Veröffentlichungstag und Bekanntmachung des Hinweises auf die Patenterteilung: **17.05.2000**
(21) Anmeldenummer: 97101952.6
(22) Anmeldetag: 07.02.1997
(51) Int. Cl.: B60C 11/03, B60C 11/04

(54) **Fahrzeugluftreifen**
Vehicle tyre
Bandage pneumatique pour véhicule

(30) Priorität: 09.02.1996 DE 19604727
(43) Veröffentlichungstag der Anmeldung: 13.08.1997
(73) Patentinhaber: Continental Aktiengesellschaft, 30165 Hannover (DE)
(72) Erfinder: Frerichs, Udo, 30855 Langenhagen (DE); Metge, Axel, 30179 Hannover (DE); Pfaff, Daniel, 30938 Burgwedel (DE); Pfeiffer, Hans D., 30827 Garbsen (DE); Ahrendt, Gernot, 2512 Tribuswinkel (AT); Schmalz, Manfred, 2532 Gumboldskirchen (AT)

(56) Entgegenhaltungen:
- EP-A- 0 454 394
- EP-A- 0 688 685
- DE-A- 3 431 045
- DE-A- 3 942 043
- DE-A- 4 300 695
- PATENT ABSTRACTS OF JAPAN vol. 016, no. 290 (M-1272), 26.Juni 1992 & JP 04 078604 A (BRIDGESTONE CORP), 12.März 1992,
- PATENT ABSTRACTS OF JAPAN vol. 016, no. 223 (M-1253), 25.Mai 1992 & JP 04 043105 A (BRIDGESTONE CORP), 13.Februar 1992,
- PATENT ABSTRACTS OF JAPAN vol. 095, no. 011, 26.Dezember 1995 & JP 07 215013 A (TOYO TIRE & RUBBER CO LTD), 15.August 1995,

## Beschreibung

Die Erfindung betrifft einen Fahrzeugluftreifen mit einem drehrichtungsgebunden gestalteten Laufstreifenprofil, welches Profilelemente aufweist, die durch Umfangsnuten, gepfeilt bzw. V-förmig verlaufende Rillen und durch schulterseitig angeordnete Quernuten gebildet sind.

Fahrzeugluftreifen mit drehrichtungsgebunden gestalteten Laufstreifenprofilen sind in unterschiedlichen Ausführungsformen bekannt. So ist beispielsweise aus der DE-A 3431045 ein Reifen mit einem Laufstreifenprofil bekannt, welches vier in Umfangsrichtung umlaufende, gerade ausgeführte Umfangsnuten und über die Laufstreifenbreite etwa V-förmig verlaufende Querrillen besitzt, die den Laufstreifen zwischen der Umfangsmittellinie des Profiles und dem Seitenrand unter bestimmten Winkeln schneiden. Das Profil ist in Zonen geteilt, wo bevorzugte Fahrflächenanteile (Positivanteile) vorliegen. Diese Ausgestaltung soll das Wasserabführungsvermögen des Laufstreifenprofiles verbessern.

Aus der DE-A 3942043 ist ein drehrichtungsgebundenes Laufstreifenprofil bekannt, welches im wesentlichen aus gepfeilt angeordneten Rippenprofilelementen und entsprechenden Profilrillen besteht, die in den Schulterbereichen abgeknickt ausgebildet sind. In den Schulterbereichen sind Quereinschnitte angeordnet, die die Naßrutschfestigkeit und das Geräuschniveau des Laufstreifenprofil verbessern sollen.

Bei der Gestaltung von drehrichtungsgebundenen Laufstreifenprofilen steht, wie auch bei den bekannten, oben erwähnten Profilen, im Vordergrund, das Wasserableitvermögen zu optimieren, um, da Reifen mit solchen Profilen vor allem für einen höheren Geschwindigkeitsbereich ausgelegt sind, die Gefahr von Aquaplaning auf nasser Fahrbahn bei höheren Geschwindigkeiten herabzusetzen. Es hat sich nun herausgestellt, daß die insbesondere bei drehrichtungsgebunden gestalteten Profilen zur Verbesserung des Wasserverdrängungsvermögens gesetzten Maßnahmen oft nachteilig für andere Profileigenschaften sind, so beispielsweise für das Abriebsverhalten und die Geräuschentwicklung bei höheren Geschwindigkeiten.

Hier setzt nun die Erfindung ein, deren Aufgabe darin besteht, ein drehrichtungsgebunden gestaltetes Laufstreifenprofil derart auszulegen, daß neben einem sehr guten Wasserableitvermögen vor allem ein gleichmäßiger Abrieb erzielt wird, wobei auch auf eine geringe Geräuschentwicklung, was das Reifen/Fahrbahngeräusch betrifft, geachtet werden soll.

Gelöst wird die gestellte Aufgabe erfindungsgemäß dadurch, daß das Laufstreifenprofil zwei breite, insbesondere gerade ausgeführte und in Umfangsrichtung umlaufende Umfangsnuten besitzt, die jeweils auf einer Seite der Mittelumfangslinie des Profiles verlaufen, wobei der zwischen den Umfangsnuten gebildete Mittelbereich des Profiles durch die V-förmigen Rillen strukturiert ist und eine Breite von 45 bis 70 %, insbesondere von 60 bis 65 %, der Laufstreifenbreite aufweist und wobei zwischen den in Umfangsrichtung aufeinanderfolgenden V-förmigen Rillen jeweils eine einzige, breite Nut verläuft, die abwechselnd die einen und die anderen Schenkel der V-förmigen Rillen verbindet.

Ein erfindungsgemäß gestaltetes Laufstreifenprofil besitzt somit lediglich zwei breite Umfangsnuten, der zwischen diesen Umfangsnuten gebildete, breite Mittelbereich des Laufstreifens hat keine derartigen Umfangsnuten. Dabei hat sich herausgestellt, daß der gegenseitige Abstand dieser beiden Umfangsnuten und damit die Breite des Mittelbereiches einen deutlichen Einfluß auf den Laufstreifenabrieb nimmt, wobei die angegebene Breite des Mittelbereiches diesbezüglich besonders vorteilhaft ist. Zusätzlich unterstützen die breiten Umfangsnuten das Wasserableitvermögen des Profiles. Auch die im Mittelbereich des Laufstreifens angeordneten, benachbarte Rillen verbindende Nuten haben diesen Effekt. Die abwechselnde Anordnung der letztgenannten Nuten hat zudem einen günstigen Einfluß auf das Rollgeräusch.

Für das Wasserableitvermögen bzw. das Aquaplaningverhalten des Profiles ist es dabei ferner von Vorteil, wenn die die V-förmigen Rillen verbindenden Nuten bezüglich der Mittelumfangslinie des Profiles eine Neigung besitzen, die gegensinnig zur Neigung der Schenkel der V-förmigen Rillen ist, die sie miteinander verbinden. Der zugehörige Winkel, den diese Nuten mit der Mittelumfangslinie einschließen, wird zwischen 20 und 30°, insbesondere zwischen 23 und 28°, gewählt.

Von der Lage dieser breiten Nuten hat es sich als vorteilhaft herausgestellt, wenn die Nuten einerends in unmittelbarer Nähe der laufstreifeninnenseitigen Endbereiche der Schenkel der V-förmigen Rillen einmünden.

Zusätzlich können die in Umfangsrichtung benachbarten V-förmigen Rillen durch schmale, insbesondere 1,5 bis 2 mm breite, weitere Nuten miteinander verbunden sein, die jeweils etwa halbmittig zwischen den V-Spitzen der Rillen und den breiten Umfangsnuten angeordnet sind, und deren Verlauf mit dem Verlauf der breiten Nuten zumindest im wesentlichen übereinstimmt. Dabei werden diese schmalen Nuten in einer Tiefe ausgeführt, die zwischen 30 und 70 % der Dessintiefe des Profiles entspricht. Diese schmalen Nuten haben einen gewissen Einfluß auf das Verformverhalten des Laufstreifens im Mittelbereich und unterstützen einen gleichmäßigen Abrieb in diesem Laufstreifenbereich.

Für das Aquaplaningverhalten hat es sich ferner als günstig herausgestellt, wenn die Schenkel der V-förmigen Rillen im Bereich der Mittelumfangslinie mit der Mittelumfangslinie einen Winkel einschließen, der zwischen 20 und 30° beträgt, und im Bereich ihrer Mündungen in die Umfangsnuten einen Winkel mit der Mittelumfangslinie einschließen, der zwischen 50 und 65° beträgt.

Auf das Reifen/Fahrbahngeräusch wirkt es sich ferner günstig aus, wenn die einen Schenkel der V-förmigen Rillen eine etwas größere Länge besitzen, als die anderen Schenkel dieser Rillen.

Einen günstigen Einfluß auf das Abriebsverhalten in den Schulterbereichen nimmt die Maßnahme, in den die Schulterblöcke der Schulterblockreihen voneinander trennenden Quernuten jeweils eine Grundanhebung vorzusehen, die in dem den Umfangsnuten benachbarten Bereich der Quernuten angeordnet ist, und durch die der Nutgrund der Quernuten in diesem Bereich auf 30 bis 70 % der Dessintiefe des Profiles angehoben wird.

Ein gleichmäßiger Abrieb wird ferner auch dadurch unterstützt, daß sowohl die Schulterblöcke als auch die Profilelemente zwischen den V-förmigen Rillen, letztere insbesondere im den Umfangsnuten benachbarten Bereich, jeweils mit ein oder zwei Lamellenfeineinschnitten versehen werden.

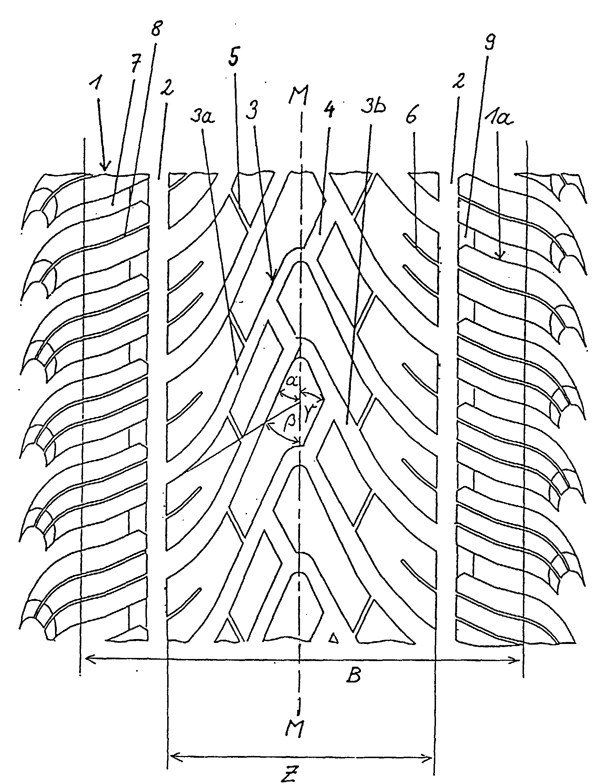

Weitere Merkmale, Vorteile und Einzelheiten der Erfindung werden nun anhand der Zeichnung, die ein Ausführungsbeispiel darstellt, näher beschrieben. Dabei ist in der einzigen Zeichnungsfigur eine Draufsicht auf eine Teilabwicklung eines gemäß der Erfindung gestalteten Laufstreifenprofiles dargestellt.

Bei dem in der Zeichnungsfigur gezeigten Laufstreifenprofil handelt es sich um ein insbesondere für PKW-Sommerreifen, und zwar vor allem für Hochgeschwindigkeitsreifen, geeignetes Profil. In der nachfolgenden Beschreibung wird das Profil über seine Breite B, die die Breite des Laufstreifens in der Bodenaufstandsfläche (gemäß E.T.R.T.O.-Standards Manual) ist, betrachtet.

Wie aus der Zeichnungsfigur ersichtlich ist, setzt sich das Laufstreifenprofil im wesentlichen aus einem Mittelbereich Z, auf dessen Ausgestaltung weiter unten näher eingegangen wird, und zwei Schulterbereichen zusammen, wo jeweils eine Schulterblockreihe 1 und eine diese vom Mittelbereich Z trennende Umfangsnut 2 vorgesehen sind. Die Umfangsnuten 2 sind als gerade über den Reifenumfang umlaufende, 6 bis 10 mm, insbesondere 7 bis 9 mm, breite Nuten ausgebildet. Neben diesen Umfangsnuten 2 sind keine weiteren durchgehenden Umfangsnuten im Laufstreifenprofil vorgesehen.

Das Laufstreifenprofil wird vom Mittelbereich Z dominiert, der eine Breite von 45 bis 70 %, insbesondere von 60 bis 65 %, der Laufstreifenbreite B aufweist. Den Mittelbereich Z prägen in Umfangsrichtung voneinander beabstandete V-förmige Rillen 3, deren abgerundet gestaltete Spitzen auf der Mittelumfangslinie M-M bzw. im wesentlichen auf dieser Mittelumfangslinie M-M des Profiles liegen, und die die Profilelemente in diesem Laufstreifenbereich bilden. Die beiden Schenkel 3a, 3b der V-förmigen Rillen 3 besitzen geringfügig unterschiedliche Längen, wodurch das beim Abrollen des Reifens entstehende Reifen/Fahrbahngeräusch günstig beeinflußt wird. Dabei verlaufen im dargestellten Ausführungsbeispiel die längeren Schenkel 3a und die kürzeren Schenkel 3b jeweils in einer der Laufstreifenhälften. Der sich durch die unterschiedlichen Schenkellängen in Umfangsrichtung ergebende Versatz der beiden Schenkel 3a, 3b einer Rille 3 erfolgt in der Größenordnung einer Rillenbreite, gemessen im Einmündungsbereich in die Umfangsnuten 2. Die Breite jeder V-förmigen Rille 3 nimmt von der Umfangsmittellinie zu den Umfangsnuten 2, wo die Schenkel 3a, 3b einmünden, insbesondere kontinuierlich, zu und beträgt im Bereich der Umfangsmittellinie M-M ca. 4 bis 7 mm, in den Einmündungsbereichen zu den Umfangsnuten 2 etwa 8 bis 11 mm. Dabei werden die V-förmigen Rillen 3 vorteilhafterweise nicht sämtlich mit gleicher Breite bzw. gleichem Breitenverlauf gewählt. Im Bereich der Laufstreifenmitte (Mittelumfangslinie M-M) schließen die Schenkel 3a, 3b mit der Mittelumfangslinie M-M einen Winkel α ein, der zwischen 20 und 30°, insbesondere um 25°, gewählt wird. Zu den Randbereichen des Mittelbereiches Z zu wird der Verlauf der Schenkel 3a, 3b flacher, sodaß im Einmündungsbereich zu den Umfangsnuten 2 ein Winkel β in der Größenordnung von 50 bis 65°, insbesondere um die 60°, vorliegt.

Durch die V-förmigen Rillen 3 ist das gegenständliche Laufstreifenprofil laufrichtungsgebunden gestaltet, wobei die Anordnung der Reifen mit einem derartigen Laufstreifenprofil am Fahrzeug derart zu erfolgen hat, daß beim Abrollen der Reifen die V-Spitzen der Rillen 3 zuerst in die Kontaktfläche mit dem Untergrund eintreten.

Eine weitere Strukturierung der Profilelemente im Laufstreifenmittelbereich Z erfolgt durch schmale Nuten 5 und breite Nuten 4. Die breiten Nuten 4 verbinden in Umfangsrichtung benachbarte Rillen 3, wobei zwischen zwei benachbarten Rillen 3 jeweils eine einzige breite Nut 4 verläuft, und zwar in unmittelbarer Nähe der Mittelumfangslinie M-M und für aufeinanderfolgende Rillen 3 einmal in der linken und einmal in der rechten Laufstreifenhälfte. Die breiten Nuten 4 sind gegenüber der Mittelumfangslinie schräg gestellt, ihr Verlauf ist gegensinnig zum Verlauf der Schenkel 3a, 3b, der Winkel γ, den sie mit der Mittelumfangslinie M-M einschließen wird zwischen 20 bis 30°, insbesondere zwischen 23 bis 28°, gewählt. Die breiten Nuten 4 sind ferner bevorzugt als gerade verlaufende Nuten mit einer Breite von ca. 5 bis 8 mm ausgeführt. Durch diese breiten Nuten 4 wird das Wasserableitvermögen des Profiles im Mittelbereich des Laufstreifens deutlich verbessert. Die schmalen Nuten 5 befinden sich etwa halbmittig zwischen der Mittelumfangslinie M-M und den breiten Umfangsnuten 2, ihre Winkelung und ihr Verlauf stimmen mit Winkelung und Verlauf der breiten Nuten 4 überein. Die schmalen Nuten 5 besitzen dabei eine Breite von ca. 1,5 bis 2 mm, ihre Tiefe entspricht nicht der vollen Dessintiefe, sondern wird zwischen 50 und 80 %, insbesondere ca 70 %, der Dessintiefe gewählt. Die Nuten 5 können auch so ausgeführt werden, daß sie über ihre Längserstreckung mit unterschiedlicher Tiefe ausgeführt werden. Durch diese schmalen Nuten 5 wird das Verformverhalten des Laufstreifens im Mittelbereich Z derart beeinflußt, daß ein gleichmäßiger Abrieb in diesem Bereich unterstützt wird.

Die einzelnen Blöcke 1a der Schulterblockreihen 1 sind so voneinander durch Quernuten 7 getrennt, daß deren Verlauf an die durch die Rillen 3 gegebene V-Form angepaßt ist, wobei jedoch die Schulterblöcke 1a aus Geräuschgründen gegenüber dem Mittelbereich Z derart angeordnet sind, daß nur gelegentlich über den Reifenumfang eine fluchtende Ausrichtung von Rillenschenkeln 3a, 3b mit Quernuten 7 erfolgt.

Das Laufstreifenprofil ist ferner, wie es allgemein üblich ist, nach dem Verfahren der Pitchlängenvariation geräuschoptimiert. Auch die versetzte Anordnung der Schulterblockreihen 1 gegenüber dem Mittelbereich und die gegenseitige Lage der beiden Schulterblockreihen 1 sind diesbezüglich von Vorteil.

Lamellenfeineinschnitte 6, die von den Umfangsnuten 2 aus in die zwischen benachbarten Rillen 3 gebildeten Profilelemente hineinreichen, unterstützen in diesen Laufstreifenbereichen einen gleichmäßigen Abrieb. Je nach Pitchlänge wird dabei bevorzugt entweder ein einziger derartiger Lamellenfeineinschnitt 6 oder es werden zwei oder mehr derartige Lamellenfeineinschnitte 6 vorgesehen.

Auch in den Schulterblöcken 1a sind aus Abriebsgründen Lamellenfeineinschnitte 8 vorgesehen, die, wie die Lamellenfeineinschnitte 6 in den Profilelementen im Mittelbereich Z, von ihrem Verlauf her zumindest im wesentlichen wie die Quernuten 7 bzw. die Rillen 3 ausgerichtet sind. Die Lamellenfeineinschnitte 6, 8 besitzen dabei eine Breite zwischen 0,5 bis 1,5, insbesondere 8 mm, und können, zumindest bereichsweise, mit unterschiedlicher Tiefe gestaltet werden. Die Anzahl der Lamellenfeineinschnitte 8 in den Schulterblöcken 1a richtet sich nach deren Umfangslänge (Pitchlänge), beim dargestellten Ausführungsbeispiel sind ein bis zwei Lamellenfeineinschnitte pro Schulterblock 1a vorgesehen. Wie dargestellt, können die Lamellenfeineinschnitte 8 in die Umfangsnuten 2 münden.

Für einen gleichmäßigen Abrieb in den Schulterbereichen wirkt es sich ferner günstig aus, wenn, wie dargestellt, in den Quernuten 7 zwischen den einzelnen Schulterblöcken 1a, bevorzugt in deren den Umfangsnuten 2 unmittelbar benachbarten Bereichen Grundanhebungen 9 vorgesehen sind, durch die der Nutgrund der Quernuten 7 an dieser Stelle auf zwischen 30 und 70 %, insbesondere ca. 50 %, der sonstigen Dessintiefe angehoben wird. Diese Grundanhebungen 9 bewirken einen Abstützungseffekt zwischen den einzelnen Blöcken 1a der Schulterblockreihen 1, was die Profilstabilität in diesen Bereichen derart beeinflußt, daß ein gleichmäßiger Abrieb unterstützt wird.

Das erfindungsgemäße Profil kann auch bezüglich der Mittelumfangslinie asymmetrischer gestellt werden, indem die Umfangsnuten in unterschiedlichen Abständen von der Mittelumfangslinie angeordnet werden. Die Breite der Schulterblockreihen wird daher ebenfalls unterschiedlich. Auch die Spitzen der V-förmigen Rillen können in einem Abstand von der Mittelumfangslinie liegen. Zusätzlich ist es dann von Vorteil, auch die Breite der V-förmigen Rillen und der Quernuten zu ändern, etwa um deutlich unterschiedliche Fahrflächenanteile in den zwei Profilbereichen beidseitig der Mittelumfangslinie zu erzielen, da es günstig ist, Reifen mit solchen Profilen gezielt auf eine Optimierung von Außen- und Innenprofilbereich, bezogen auf das Fahrzeug, auszulegen.

## Patentansprüche

1. Fahrzeugluftreifen mit einem drehrichtungsgebunden gestalteten Laufstreifenprofil, welches Profilelemente aufweist, die durch Umfangsnuten, gepfeilt bzw. V-förmig verlaufende Rillen und durch schulterseitig angeordnete Quernuten gebildet sind, dadurch gekennzeichnet, daß das Laufstreifenprofil zwei breite, insbesondere gerade ausgeführte und in Umfangsrichtung umlaufende Umfangsnuten (2) besitzt, die jeweils auf einer Seite der Mittelumfangslinie (M-M) des Profiles verlaufen, wobei der zwischen den Umfangsnuten (2) gebildete Mittelbereich (Z) des Profiles durch die V-förmigen Rillen (3) strukturiert ist und eine Breite von 45 bis 70 %, insbesondere von 60 bis 65 %, der Laufstreifenbreite (B) aufweist und wobei zwischen den in Umfangsrichtung aufeinanderfolgenden V-förmigen Rillen (3) jeweils eine einzige, breite Nut (4) verläuft, die abwechselnd die einen und die anderen Schenkel (3a, 3b) der V-förmigen Rillen (3) verbindet.

2. Fahrzeugluftreifen nach Anspruch 1, dadurch gekennzeichnet, daß die die V-förmigen Rillen (3) verbindenden Nuten (4) bezüglich der Mittelumfangslinie (M-M) des Profiles eine Neigung besitzen, die gegensinnig zur Neigung der Schenkel (3a, 3b) der V-förmigen Rillen (3) ist, die sie miteinander verbinden.

3. Fahrzeugluftreifen nach Anspruch 2, dadurch gekennzeichnet, daß der Winkel (γ), den diese Nuten (4) mit der Mittelumfangslinie (M-M) einschließen zwischen 20 und 30°, insbesondere zwischen 23 und 28°, gewählt wird.

4. Fahrzeugluftreifen nach einem der Ansprüche 1 bis 3, dadurch gekennzeichnet, daß die Nuten (4) einerends in unmittelbarer Nähe der laufstreifeninnenseitigen Endbereiche der Schenkel (3a, 3b) der V-förmigen Rillen (3) einmünden.

5. Fahrzeugluftreifen nach einem der Ansprüche 1 bis 4, dadurch gekennzeichnet, daß die in Umfangsrichtung benachbarten V-förmigen Rillen (3) durch schmale, insbesondere 1,5 bis 2 mm breite, weitere Nuten (5) miteinander verbunden sind, die jeweils etwa halbmittig zwischen den V-Spitzen der Rillen (3) und den breiten Umfangsnuten (2) angeordnet sind, und deren Verlauf mit dem Verlauf der breiten Nuten (4) zumindest im wesentlichen übereinstimmt.

6. Fahrzeugluftreifen nach Anspruch 5, dadurch gekennzeichnet, daß die Tiefe der schmalen Nuten (5) 50 bis 80 % der Dessintiefe des Profiles beträgt.

7. Fahrzeugluftreifen nach einem der Ansprüche 1 bis 6, dadurch gekennzeichnet, daß die Schenkel (3a, 3b) der V-förmigen Rillen (3) im Bereich der Mittelumfangslinie (M-M) mit der Mittelumfangslinie (M-M) einen Winkel (α) einschließen, der zwischen 20 und 30° beträgt, und im Bereich ihrer Mündungen in die Umfangsnuten (2) einen Winkel (β) mit der Mittelumfangslinie einschließen, der zwischen 50 und 65° beträgt.

8. Fahrzeugluftreifen nach einem der Ansprüche 1 bis 7, dadurch gekennzeichnet, daß die einen Schenkel (3a) der V-förmigen Rillen (3) eine etwas größere Länge besitzen, als die anderen Schenkel (3b) dieser Rillen (3).

9. Fahrzeugluftreifen nach einem der Ansprüche 1 bis 8, dadurch gekennzeichnet, daß in den die Schulterblöcke (1a) der Schulterblockreihen (1) voneinander trennenden Quernuten (7) jeweils eine Grundanhebung (9) vorgesehen ist, die in dem den Umfangsnuten (2) benachbarten Bereich der Quernuten (7) angeordnet ist.

10. Fahrzeugluftreifen nach einem der Ansprüche 1 bis 9, dadurch gekennzeichnet, daß sowohl die Schulterblöcke (1a) als auch die Profilelemente zwischen den V-förmigen Rillen, letztere insbesondere im den Umfangsnuten (2) benachbarten Bereich, jeweils mit ein oder zwei Lamellenfeineinschnitten (8, 10) versehen werden.

## Claims

1. Pneumatic vehicle tyre, having a tread strip profile, which is configured to be adapted to the direction of rotation and includes profile elements which are formed by circumferential grooves, by notches which extend in an arrow-shaped manner, or respectively in a V-shaped manner, and by transverse grooves which are disposed at the shoulder end, characterised in that the tread strip profile has two wide circumferential grooves (2) which, more especially, have a rectilinear configuration and extend in the circumferential direction, each circumferential groove extending on one side of the central circumferential line (M-M) of the profile, the central region (Z) of the profile being formed between the circumferential grooves (2) and being structured by the V-shaped notches (3), said central region having a width of between 45 and 70 %, more especially between 60 and 65 %, of the tread strip width (B), and a single wide groove (4) extending between each of the V-shaped notches (3), which follow one another when viewed with respect to the circumferential direction, said wide groove alternately connecting the portions (3a, 3b) of the V-shaped notches (3).

2. Pneumatic vehicle tyre according to claim 1, characterised in that the grooves (4), which connect the V-shaped notches (3), have an inclination relative to the central circumferential line (M-M) of the profile, said inclination being in the opposite direction to the inclination of the portions (3a, 3b) of the V-shaped notches (3), which they interconnect.

3. Pneumatic vehicle tyre according to claim 2, characterised in that the angle (γ), which these grooves (4) form with the central circumferential line (M-M), is selected to be between 20 and 30°, more especially between 23 and 28°.

4. Pneumatic vehicle tyre according to one of claims 1 to 3, characterised in that the grooves (4) terminate at one end in the direct vicinity of the end regions of the portions (3a, 3b) of the V-shaped notches (3), said end regions being on the inside of the tread strip.

5. Pneumatic vehicle tyre according to one of claims 1 to 4, characterised in that the V-shaped notches (3), which are adjacent one another when viewed with respect to the circumferential direction, are interconnected by additional narrow grooves (5), which have a width of between 1.5 and 2 mm, more especially, and are each disposed substantially halfway between the tips of the V-shaped notches (3) and the wide circumferential grooves (2), and the configuration of said narrow grooves at least substantially corresponds to the configuration of the wide grooves (4).

6. Pneumatic vehicle tyre according to claim 5, characterised in that the depth of the narrow grooves (5) is between 50 and 80 % of the pattern depth of the profile.

7. Pneumatic vehicle tyre according to one of claims 1 to 6, characterised in that the portions (3a, 3b) of the V-shaped notches (3) in the region of the central circumferential line (M-M) form with the central circumferential line (M-M) an angle (α) which is between 20 and 30°, and, in the region of their openings terminating in the circumferential grooves (2), said portions form with the central circumferential line an angle (β) which is between 50 and 65°.

8. Pneumatic vehicle tyre according to one of claims 1 to 7, characterised in that the portions (3a) of the V-shaped notches (3) have a somewhat greater length than the other portions (3b) of these notches (3).

9. Pneumatic vehicle tyre according to one of claims 1 to 8, characterised in that a main raised portion (9) is provided in each of the transverse grooves (7), which separate the shoulder blocks (1a) of the rows of shoulder blocks (1) from one another, said raised portion being disposed in the region of the transverse grooves (7) adjacent the circumferential grooves (2).

10. Pneumatic vehicle tyre according to one of claims 1 to 9, characterised in that both the shoulder blocks (1a) and the profile elements between the V-shaped notches, the latter more especially in the region adjacent the circumferential grooves (2), are each provided with one or two fine laminar incisions (8, 10).

## Revendications

1. Bandage pneumatique pour véhicule automobile comprenant une sculpture de la bande de roulement qui est conçue en fonction du sens de rotation et comprend des éléments sculptés, qui sont formés par des rainures périphériques, des cannelures en flèche ou en V et des rainures transversales disposées du côté de l'épaulement, caractérisé en ce que la sculpture de la bande de roulement comporte deux larges rainures périphériques (2) de forme rectiligne, en particulier, et orientées dans le sens circulaire, qui s'étendent chacune sur un côté de la ligne médiane circulaire (M-M) de la sculpture, la zone médiane (Z) de la sculpture formée entre les rainures périphériques (2) étant structurée par les cannelures en forme de V (3) et présentant une largeur comprise entre 45 et 70 %, en particulier entre 60 et 65 %, de la largeur de la bande de roulement, et une large rainure (4) unique s'étendant entre les cannelures (3) en forme de V qui se succèdent dans le sens circulaire, laquelle rainure relie alternativement les unes et les autres branches (3a, 3b) des cannelures en forme de V (3).

2. Bandage pneumatique pour véhicule automobile selon la revendication 1, caractérisé en ce que les rainures (4) reliant les cannelures (3) en forme de V présentent une inclinaison par rapport à la ligne médiane circulaire (M-M) de la sculpture, laquelle inclinaison est orientée dans le sens contraire de l'inclinaison des branches (3a, 3b) des cannelures (3) en forme de V.

3. Bandage pneumatique pour véhicule automobile selon la revendication 2, caractérisé en ce que l'angle (γ) formé entre lesdites rainures (4) et la ligne médiane circulaire (M-M) est choisi avec une valeur comprise entre 20 et 30°, en particulier entre 23 et 28°.

4. Bandage pneumatique pour véhicule automobile selon l'une quelconque des revendications 1 à 3, caractérisé en ce qu'une extrémité des rainures (4) débouche à proximité immédiate des extrémités, du côté de l'intérieur de la bande de roulement, des branches (3a 3b) des cannelures (3) en forme de V.

5. Bandage pneumatique pour véhicule automobile selon l'une quelconque des revendications 1 à 4, caractérisé en ce que les cannelures (3) en forme de V voisines dans le sens circulaire, sont reliées entre elles par d'autres rainures (5) étroites, en particulier avec une largeur comprise entre 1,5 et 2 mm, qui sont disposées chacune pratiquement au milieu entre la pointe du V des cannelures (3) et les larges rainures périphériques (2), et dont le tracé coïncide au moins sensiblement avec le tracé des rainures larges (4).

6. Bandage pneumatique pour véhicule automobile selon la revendication 5, caractérisé en ce que la profondeur des rainures étroites (5) est comprise entre 50 et 80 % de la profondeur du dessin de la sculpture.

7. Bandage pneumatique pour véhicule automobile selon l'une quelconque des revendications 1 à 6, caractérisé en ce que les branches (3a, 3b) des cannelures (3) en forme de V forment avec la ligne médiane circulaire (M-M), dans la zone de la ligne médiane circulaire (M-M), un angle (α), qui est compris entre 20 et 30°, et forment avec la ligne médiane circulaire, dans la zone dans laquelle elles débouchent dans les rainures périphériques (2), un angle (β) qui est compris entre 50 et 65°.

8. Bandage pneumatique pour véhicule automobile selon l'une quelconque des revendications 1 à 7, caractérisé en ce que l'une des branches (3a) des cannelures (3) en forme de V est plus longue que l'autre branche (3b) de ces cannelures.

9. Bandage pneumatique pour véhicule automobile selon l'une quelconque des revendications 1 à 8, caractérisé en ce qu'il est prévu de réaliser dans les rainures transversales (7), qui séparent les blocs sculptés (1a) dans la rangée de blocs (1) réalisée sur l'épaulement, une bosse (9) qui est disposée sur le fond dans une partie des rainures transversales (7) contiguë aux rainures périphériques (2).

10. Bandage pneumatique pour véhicule automobile selon l'une quelconque des revendications 1 à 9, caractérisé en ce que non seulement les blocs sculptés (1a), mais aussi les éléments sculptés entre les cannelures en forme de V, en particulier dans la zone contiguë aux rainures périphériques (2) pour ces derniers, sont munis chacun d'une ou deux incisions fines formant des lamelles (8, 10).
